# EUROPEAN PATENT SPECIFICATION

(11) **EP 4 483 626 B1**
(45) Date of publication and mention of the grant of the patent: **10.12.2025**
(21) Application number: 23706012.4
(22) Date of filing: 17.02.2023
(51) Int. Cl.: H04W 52/02, H04W 76/00, H04W 80/00, H04B 1/00, H04L 5/00

(54) **MEASUREMENTS DURING A SMALL DATA TRANSMISSION IN CELLULAR COMMUNICATION NETWORKS**
MESSUNGEN WÄHREND EINER KLEINEN DATENÜBERTRAGUNG IN ZELLULAREN KOMMUNIKATIONSNETZEN
MESURES PENDANT UNE TRANSMISSION DE PETITES DONNÉES DANS DES RÉSEAUX DE COMMUNICATION CELLULAIRE

(30) Priority: 21.02.2022 FI 20225155
(43) Date of publication of application: 01.01.2025
(73) Proprietor: Nokia Technologies Oy, 02610 Espoo (FI)
(72) Inventor: KOSKINEN, Jussi-Pekka, 90420 Oulu (FI); TURTINEN, Samuli Heikki, 91100 Ii (FI); HENTTONEN, Tero, 02760 Espoo (FI)
(74) Representative: Nokia EPO representatives
(86) International application number: PCT/EP2023/054064
(87) International publication number: WO 2023/156613

(56) References cited:
- US-A1- 2022 022 276
- ZTE COROPORATION (RAPPORTEUR): "Introduction of SDT", vol. RAN WG2, no. Electronic; 20220117 - 20220126, 31 January 2022 (2022-01-31), XP052104439, Retrieved from the Internet <URL:https://ftp.3gpp.org/tsg_ran/WG2_RL2/TSGR2_116bis-e/Docs/R2-2202021.zip R2-2202021_draft-RunningSdtCr_38331-g41_PostR2#116bis-e_v00_rapp.docx> [retrieved on 20220131]

## Description

### FIELD

Various example embodiments relate in general to cellular communication networks and more specifically, to measurements during a small data transmission in such networks.

### BACKGROUND

User Equipments, UEs, typically have limited power. Hence, UEs may switch between a power-saving mode, like an idle mode, and a mode that is designed for transmissions of large amounts of data, like a connected mode. In addition, there may be one or more states between the power-saving mode and the mode that is designed for transmissions of large amounts of data. For instance, an inactive mode may be exploited to enable low signaling burden when switching quickly to the connected mode. At least small amounts of data may be transmitted when a UE is in the inactive mode. In general, the modes may be referred as states as well and UEs may transition between the states.

The inactive mode may be used at least in case of 5G radio access technology, which may also be referred to as New Radio, NR, access technology. 3rd Generation Partnership Project, 3GPP, develops standards for 5G/NR and one of the topics in the 3GPP discussions is related to Small Data Transmission, SDT, in the inactive mode and there is a need to provide enhanced methods, apparatuses and computer programs for SDT. SDT may take place in other modes in the future as well, e.g., in the idle mode. Such enhancements may also be beneficial in other cellular communication networks as well, such as in 6G networks in the future.

US 2022/022276 deals with selection of bandwidth parts for transmission in resources based small data transmission in wireless communication systems. Upon initiation of a procedure to use a configured grant resource in RRC inactive state, a user equipment performs bandwidth part switching. The user equipment performs uplnik transmissions and upon completion of the procedure, the user equipment performs another bandwidth part switching.
ZTE COROPORATION (RAPPORTEUR), "Introduction of SDT", Vol. {0} RAN WG2, No. {0} Electronic; 20220117 - 20220126, 31 January 2022 (2022-01-31), 3GPP DRAFT; R2-2202021, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE describes the SDT procedure in general.

The scope of protection sought for various example embodiments of the disclosure is set out by the independent claims. The example embodiments and features, if any, described in this specification that do not fall under the scope of the independent claims are to be interpreted as examples useful for understanding various example embodiments of the disclosure.

According to a first aspect of the present disclosure, there is provided an apparatus according to claim 1.

Example embodiments of the first aspect may comprise at least one feature from the following bulleted list or any combination of the following features:
- the apparatus further comprises means for transmitting results of the performed measurements to a wireless network node when starting a connection with the wireless network node;
- wherein starting the connection with the wireless network node comprises a connection resume or setup procedure not associated with the small data transmission procedure;
- the apparatus further comprises means for continuing, starting, or re-starting the timer upon determining that the small data transmission procedure has been completed;
- wherein the small data transmission procedure is determined to be completed successfully when a connection release or connection reject message is received from the wireless network node by the apparatus, or the small data transmission procedure is determined to be completed unsuccessfully when a connection release or connection reject message is not received within a time interval;
- the apparatus further comprises means for starting another timer when the timer is stopped, wherein said another timer is associated with the small data transmission procedure; and/or means for stopping the timer when said another timer is started;
- wherein said measurements are performed while a timer is running, and the apparatus further comprises means for continuing performing measurements during the small data transmission procedure upon stopping the timer;
- the apparatus further comprises means for determining whether to stop performing measurements during the small data transmission based on an indication received from the wireless network node;
- wherein the apparatus performs the measurements in the inactive mode, and further comprises means for moving the apparatus to the idle mode upon determining that a configuration combining performing measurements and small data transmission is invalid;
- the apparatus further comprises means for continuing performing the measurements and not performing the small data transmission procedure or means for stopping performing the measurements and performing the small data transmission procedure;
- wherein said measurements are performed while a timer is running, and the apparatus further comprises means for storing results of the performed measurements upon determining to stop performing the measurements, means for continuing the timer and continuing performing the measurements upon determining that the small data transmission procedure has been completed or upon receiving a connection resume or connection setup message and means for transmitting the stored measurement results to the wireless network node upon expiry of the timer;
- the apparatus further comprises means for determining that the apparatus is moved to a connected mode after the small data transmission procedure and means for transmitting, to the wireless network node, an indication indicating whether the measurements were stopped during the small data transmission procedure;
- the apparatus further comprises means for determining that the apparatus is moved to the idle mode or continues in the inactive mode after the small data transmission procedure and means for receiving, from the wireless network node, an indication indicating whether to continue performing the measurements in the idle or inactive mode.

According to a second aspect of the present disclosure, there is provided an apparatus according to independent claim 14.

### BRIEF DESCRIPTION OF THE DRAWINGS

FIGURE 1 illustrates an example of a network scenario in accordance with at least some example embodiments;
FIGURE 2 illustrates a signaling graph in accordance with at least some example embodiments;
FIGURE 3 illustrates an example apparatus capable of supporting at least some example embodiments;
FIGURE 4 illustrates a flow graph of a method in accordance with at least some example embodiments.

### EXAMPLE EMBODIMENTS

The operation related to measurements during a Small Data Transmission, SDT, procedure in cellular communication networks may be enhanced by the procedures described herein. More specifically, a User Equipment, UE, may be in an idle or inactive mode before the SDT procedure and perform measurements. While being in the idle or inactive mode, the UE may determine that the SDT procedure is initiated. At that point, the UE may also determine whether to stop, or continue, performing the measurements during the SDT procedure in the same way as was done before the SDT procedure. Therefore, the measurements may be disabled or enabled during the SDT procedure, e.g., by a wireless network node serving the UE. Moreover, the measurements may be continued even though a measurement timer, like T331 timer, would be stopped when the SDT procedure is initiated, thereby failure of the measurement procedure due to the SDT procedure.

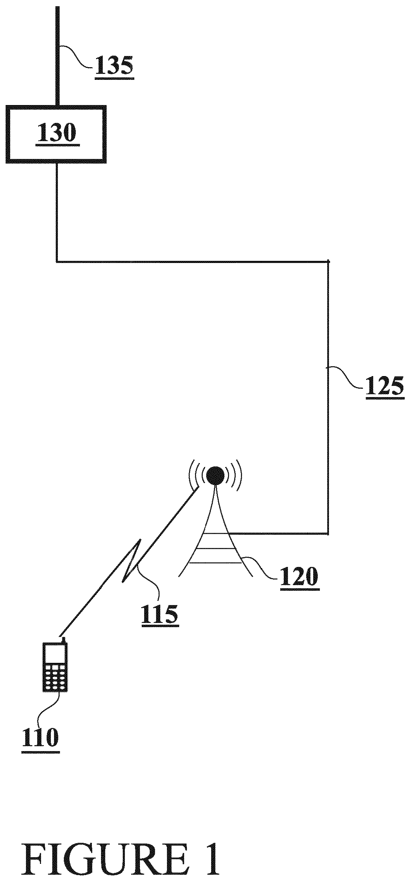

FIGURE 1 illustrates an example of a network scenario in accordance with at least some example embodiments. According to the example network scenario of FIGURE 1, there may be a cellular communication system, which comprises UE 110, wireless network node 120 and core network element 130. UE 110 may be connected to wireless network node 120 via air interface 115 and wireless network node 120 may be connected to core network 130 via wired interface 125. In some example embodiments, air interface 115 may a beam-based interface.

UE 110 may comprise, for example, a smartphone, a cellular phone, a Machine-to-Machine, M2M, node, Machine-Type Communications, MTC, node, RedCap UE (Reduced Capability UE) node, an Internet of Things, IoT, node, a car telemetry unit, a laptop computer, a tablet computer or, indeed, any kind of suitable wireless terminal, like a relay. Wireless network node 120 may be considered as a serving node for UE 110 and one cell of wireless network node 120 may be a serving cell for UE 110.

Air interface 115 between UE 110 and wireless network node 120 may be configured in accordance with a Radio Access Technology, RAT, which both UE 110 and wireless network node 120 are configured to support. Examples of cellular RATs include Long Term Evolution, LTE, New Radio, NR, which may also be known as fifth generation, 5G, radio access technology and MulteFire. For example in the context of LTE, wireless network node 120 may be referred to as eNB while wireless network node 120 may be referred to as gNB in the context of NR. In some example embodiments, wireless network node 120 may be referred to as a Transmission and Reception Point, TRP, or control multiple TRPs that may be co-located or non-co-located. In some example embodiments, wireless network node 120 may be a relay. In any case, example embodiments of the present disclosure are not restricted to any particular wireless technology. Instead, example embodiments may be exploited in any cellular communication network wherein SDT is used.

Wireless network node 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. Wireless network node 120 may be connected, directly or via at least one intermediate node, with core network 130 or with another core network.

In some example embodiments, the network scenario may comprise a relay node instead of, or in addition to, UE 110 and/or wireless network node 120. Relaying may be used for example when operating on millimeter-wave frequencies. One example of the relay node may be an Integrated Access and Backhaul, IAB, node. The IAB node may be referred to as a self-backhauling relay as well. Another example of a relay may be an outband relay. In general, the relay node may comprise two parts:
1) Distributed Unit, DU, part which may facilitate functionalities of wireless network node 120, such as a gNB. Thus, in some example embodiments, the DU part of a relay may be referred to as wireless network node 120 and the DU may perform tasks of wireless network node 120;
2) Mobile Termination, MT, part which may facilitate functionalities of UE 110, i.e., a backhaul link which may be the communication link between a parent node (DU), such as a DU part of wireless network node 120, and the relay, such as an IAB node. In some example embodiments, the MT part may be referred to as UE 110 and perform tasks of UE 110.

In general, the SDT procedure in the inactive state may be exploited to avoid the signalling overhead and delay associated with transitioning UE 110 from the inactive mode to the connected mode, to perform a SDT. The SDT procedure may be for example Random Access Channel, RACH,-based SDT or a Configured Grant, CG, -based SDT.

Measurements performed by UE 110 in the idle or inactive mode, and reporting of results of the measurements, may be referred to as Early Measurement Reporting, EMR. In case of such measurements, UE 110 may be assigned to measure inter-frequency carriers indicated by wireless network node 120 while it is in the idle or inactive mode. UE 110 may then report the results of the measurements back to wireless network node 120 when starting a connection with wireless network node 120.

Said reporting of the results of the measurements may be done after security activation, which means that the results of the measurements may be reported for example when a connection resume complete message, RRCResumeComplete, is transmitted (for the inactive mode) or via a request of wireless network node 120, like UEInformationRequest + UEInformationResponse (for the idle and inactive modes). The measurement operation may be controlled by a measurement timer, like T331 defined in 3GPP standard TS 38.331 v.16.7.0, Section 5.7.8.3. The measurement timer may be provided to UE 110 by wireless network node 120 when UE 110 moves from the connected mode to the idle or inactive mode.Before SDT there was no Signaling Radio Bearer, SRB, such as SRB1 or SRB2, or Data Radio Bearer, DRB, transmission in the inactive mode. These happened only in the connected mode, but such transmission may happen using SDT in the inactive mode nowadays. In the inactive mode, during the SDT procedure, many operations may be missing compared to the connected mode, including event based Radio Resource Managements, RRM, measurement reporting, handover, Channel State Information, CSI, measurements (reporting), efficient beam management etc. Hence, SDT may be seen as being performed while UE 110 is in principle in-between the inactive and connected modes (since it is nominally in INACTIVE but behaving as if it was moving to CONNECTED), and it is discussed whether measurements in the idle and/or inactive mode should be continued, or not, during the SDT procedure.

More specifically, according to LTE REL-15 or NR REL-16, UE 110 shall perform measurements in the idle or inactive mode while the measurement timer T331 is running as shown in the following excerpt from 3GPP standard specification TS 38.331 (it is noted that standard specification TS 36.331 is almost the same, but the message and field names are slightly varied).

| | START | STOP | At Expiry |
|---|---|---|---|
| T331 | Upon receiving | Upon receiving | Release the stored |
| | *RRCConnectionRele ase* message including *measldleConfig.* | *RRCConnectionSetup, RRCConnectionResume, RRCConnectionRelease* with an idle/inactive measurement configuration or indication to release the configuration, if *validityArea* is configured, upon reselecting to cell that does not belong to *validityArea (if confgirued),* or upon reselecting to an inter-RAT cell. | *VarMeasIdleConfig.* |

The network, e.g., wireless network node 120, may request UE 110 to measure NR and/or E-UTRA carriers in the idle mode, like RRC_IDLE, or in an inactive mode, like RRC_INACTIVE, via dedicated measurement configuration given in a release message, such as RRCRelease message. If UE 110 was configured to perform measurements of NR and/or E-UTRA carriers while in the idle mode, it may provide an indication of the availability of corresponding measurement results to wireless network node 120 in a connection setup message, like RRCSetupComplete message. The network may further request UE 110 to report results of the measurements that were performed in the idle mode after security activation. The request for the results of the measurements may be transmitted by the network immediately after transmitting a Security Mode Command, i.e., before the reception of a Security Mode Complete message from UE110 via for example a UEInformationRequest. UE 110 may then respond to the request with a UEInformationResponse message comprising the results of the measurement.

Alternatively, if UE 110 was configured to perform measurements of NR and/or E-UTRA carriers while being in the inactive mode, wireless network node 120 may request UE 110 to provide corresponding results of the measurements in a connection resume message, like RRCResume message, since that also activates the security. UE 110 may then include the results of the measurements that were performed in the inactive mode to a connection resume message, like a RRCResumeComplete message. As another option, UE 110 may provide an indication of the availability of the measurement results to wireless network node 120 in a connection resume complete message, like RRCResumeComplete message, and wireless network node 120 may then request UE 110 to provide these measurement results.

Continuation of measurements, that were performed before the initiation of the SDT procedure in the idle or inactive mode, during the SDT procedure may complicate the SDT procedure without further enhancements. For instance, transmission of an uplink Radio Resource Control, RRC, message using, e.g., SRB1 during the SDT procedure may not be possible according to the 3GPP standard specifications. In such a case, results of the measurement, that were performed before the start of the SDT procedure in the idle or inactive mode, could not be transmitted to wireless network node by UE 110 during the SDT procedure.

However, according to the current 3GPP standard specifications results of the measurement in the idle or inactive mode may only be stopped when UE 110 receives a connection setup message, like RRC Setup message, or a connection resume message, like RRC Resume message, which is the point when UE 110 nominally changes to the connected mode from the idle or the inactive mode. Then a challenge is how measurements and reporting in the idle or inactive mode can be disabled in an efficient manner from a UE implementation and specification complexity point of view. Additionally, according to the current 3GPP standard specifications UE 110 would also release, i.e., delete from its memory, the results of the measurements that were performed in the idle or inactive mode when the measurement timer is stopped. So if the measurement timer is stopped due to the initiation of the SDT procedure, the entire measurement procedure in the idle or inactive mode, i.e., the EMR procedure, may fail if the network, e.g., wireless network node 120, decides to move UE 110 to the connected mode after an initial SDT transmission.

Embodiments of the present disclosure therefore provide mechanisms for disabling and enabling measurements that were performed in the idle mode or in the inactive mode, and/or reporting of said measurements, during the SDT procedure. UE 110 may determine whether to stop, or continue, performing measurements, that were performed before an initiation of a SDT procedure, upon determining that the SDT procedure has been initiated while the apparatus is in the idle or inactive mode. Thus, UE 110 may continue the measurements during the SDT procedure as well and then transmit results of the performed measurements to wireless network node 120 when starting a connection with wireless network node 120, thereby avoiding failure of the measurement procedure due to the SDT procedure. Alternatively, UE 110 may stop the measurements during the SDT procedure and then continue after the SDT procedure has been completed, to avoid complicating the SDT procedure.

In some example embodiments, the measurement timer, like T331, may be (explicitly) stopped when the SDT procedure is initiated. That is, UE 110 may perform measurements while being in the idle or inactive mode and the measurement timer is running, and then stop the measurement timer upon determining that the SDT procedure has been initiated while it is in the idle or inactive mode. UE 110 may be in the inactive mode during the SDT procedure so if UE 110 is in the idle mode before that, UE 110 may need to move to the inactive mode, possibly via the connected mode, for the SDT procedure. Measurement results may also be provided to the network in transition from the idle/inactive mode to the connected mode.

In some example embodiments, UE 110 may continue or re-start the measurement timer after the SDT procedure is completed. UE 110 may determine that the SDT procedure is completed successfully when a connection release message, like a RRCRelease message, or a connection reject message, like RRCReject message, is received by UE 110 from wireless network node 120. Alternatively, UE 110 may determine that the SDT procedure is not completed successfully when a connection release message or connection reject message is not received within a certain time interval, for example if RRCRelease message is not received, e.g., upon cell re-selection, expiry of the SDT failure detection timer, or an Radio Link Control, RLC, entity reaching a configured maximum retransmission threshold.

In some example embodiments, UE 110 may continue running the measurement timer while the SDT procedure is ongoing or while the SDT failure detection timer is running. However, in some examples, UE 110 may not perform measurements while the SDT procedure is ongoing or while the SDT failure detection timer is running. UE 110 may determine that the SDT procedure is completed successfully when a connection release message, like a RRCRelease message, or a connection reject message, like RRCReject message, is received by UE 110 from wireless network node 120. Alternatively, UE 110 may determine that the SDT procedure is not completed successfully when a connection release or reject message is not received within a certain time interval, for example if RRCRelease message is not received, e.g., upon cell re-selection, expiry of the SDT failure detection timer, or an Radio Link Control, RLC, entity reaching a configured maximum retransmission threshold. When the SDT procedure is completed either successfully or not successfully, UE 110 may determine to continue performing the measurements while in idle or inactive mode. The measurements may be the idle/inactive measurements.

In some example embodiments, the SDT procedure may be determined as being successfully completed after UE 110 is directed to the idle mode, e.g., RRC_IDLE via RRCRelease message, or to the inactive mode, e.g., RRC_INACTIVE via RRCRelease or RRCReject message, or to the connected mode, e.g., RRC_CONNECTED via RRCResume or RRCSetup message. The SDT procedure may be determined as being unsuccessfully completed upon cell re-selection, expiry of the SDT failure detection timer, or an RLC entity reaching a configured maximum retransmission threshold. Upon unsuccessful completion of the SDT procedure, UE 110 may transition to the idle mode, e.g., RRC_IDLE.

In some example embodiments, the measurement timer may be stopped when a timer associated with the SDT procedure "Txxx", which can be a new SDT timer or the SDT failure detection timer is started. That is, UE 110 may start the timer associated with the SDT procedure when the measurement timer is stopped. The measurement timer may be referred to as a timer in general and the timer associated with the SDT procedure may be referred to as another timer.

In some example embodiments, UE 110 may (implicitly) continue performing the measurements, that were performed in the idle or inactive mode before the SDT procedure, during the SDT procedure as well.

In some example embodiments, the results of the performed measurements may be provided to wireless network node 110 by UE 110 in a subsequent, consequent non-SDT connection resume or setup procedure, like RRC Resume or RRC Setup procedure. For instance, there may be a new procedure after the SDT procedure is completed or upon wireless network node 120 transmits a connection resume message, RRC Resume message, or a setup message, like a RRC Setup, during the SDT procedure. That is, UE 110 may transmit results of the performed measurement wireless network node 120 when starting a connection with wireless network node 120, wherein starting the connection with wireless network node may comprise a connection resume or a connection setup procedure not associated with SDT.

In some example embodiments, wireless network node 120 may transmit an indication to UE 110 (via dedicated and/or broadcast signaling), the indication indicating whether UE 110 shall continue or not continue the measurements, that were performed in the idle or inactive mode before the SDT procedure, during the SDT procedure. UE 110 may hence determine whether to stop, or continue, performing the measurements based on the indication received from wireless network node 120.

In some example embodiments, UE 110 may consider configuration with EMR and SDT as invalid and then move to the idle mode. That is, UE 110 may move to the idle mode upon determining that a configuration by wireless network node 120 is invalid, the configuration combining performing measurements, that were performed in the idle or inactive mode, and SDT.

Alternatively, UE 110 may prioritize a configuration of performing measurements in the idle or inactive mode or a SDT configuration, i.e., UE 110 may either not perform the SDT procedure and continue performing the measurements in the idle or inactive mode, doing normal connection setup or resume when required, or perform the SDT procedure and stop performing the measurements during the SDT procedure. That is, UE 110 may continue performing said measurements and not performing the SDT procedure or stop performing said measurements and perform the SDT procedure.

In some example, stopping of the measurements, that were performed in the idle or inactive mode before the SDT procedure, due to the start of the SDT procedure, may not cause UE 110 to release the stored measurement results even if the measurement timer, like T331, is stopped. Instead, UE 110 may retain results of the performed measurements and continue the measurement timer, and performing measurements, either after the SDT procedure has completed/stopped or when UE 110 receives a connection resume message, like RRCResume message, or a connection setup message, like RRCSetup message, and behave, e.g., according to legacy EMR rules. That is, UE 110 may report measurement availability based on a status of the measurement status before the SDT procedure, indicate if it has stored results of the performed measurements and follow network commands for measurement retrieval. UE 110 may store results of the performed measurements upon determining to stop performing the measurements, continue the measurement timer and performing the measurements upon determining that the SDT procedure has been completed or upon receiving a connection resume or connection setup message, and transmit the stored measurement results to wireless network node 120 upon expiry of the measurement timer.

In some example embodiments, UE 110 may indicate to wireless network node 120 whether it had stopped the measurements during, or for, the SDT procedure. That is, UE 110 may transmit to wireless network node 120 an indication indicating whether the measurements were stopped during the SDT procedure.

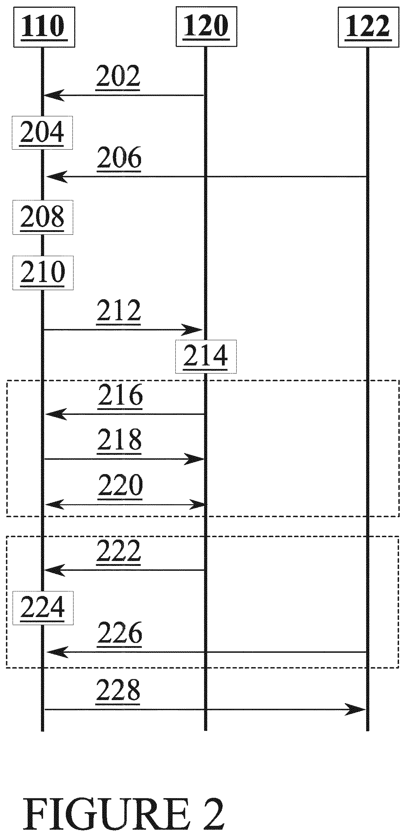

FIGURE 2 illustrates a first signaling graph in accordance with at least some example embodiments. On the vertical axes are disposed, from the left to the right, UE 110, serving wireless network node 120, i.e., the serving cell of UE 110, and neighboring wireless network node 122, i.e., neighbour cell(s) measured for EMR. Time advances from the top towards the bottom. FIGURE 2 illustrates one example about how some example embodiments of the present disclosure may be applied.

At step 202, wireless network node 120 may configure UE 110 to perform measurement in the idle mode or inactive mode, i.e., with EMR, and/or SDT. Alternatively, or in addition, wireless network node may configure UE 110 by indicating that SDT allowed. The configuration(s) may be provided using a dedicated or broadcast signalling. In some example embodiments, wireless network node 120 may transmit an indication to UE 110, the indication indicating whether UE 110 is allowed to stop performing measurements, i.e., to stop EMR, at SDT.

At step 204, UE 110 may move to the idle or inactive mode. In some example embodiments, the SDT procedure may be performed in the inactive mode but measurements and reporting may be performed in the idle and connected modes,

At step 206, UE 110 may perform measurements while UE 110 is in the idle or inactive mode. At step 208, a SDT procedure may be initiated, e.g., due to arrival of data. That is, data arrival may trigger initiation of the SDT procedure. UE 110 may determine whether to stop performing measurements upon determining thatthea SDT procedure has been initiated while UE 110 is in the idle or inactive mode. For instance, UE 110 may determine whether to stop performing the measurements based on the indication received from wireless network node 120 at step 202. In some example embodiments, UE 110 may determine to stop the measurement timer upon determining that the SDT procedure has been initiated while UE 110 is in the idle or inactive mode.

At step 210, UE 110 may start the SDT procedure, e.g., by sending a connection resume request message, like RRCResumeRequest message, for the SDT procedure. In some example embodiments, UE 110 may continue performing the measurements during the SDT procedure while UE 110 is in the idle or inactive mode upon determining, at step 208, not to stop performing the measurements. UE 110 may thus continue performing the measurements, i.e., continue EMR, upon stopping the measurement timer at step 208. That is, UE 110 may continue performing the measurements even though the measurement timer, like T311, is stopped. UE 110 may also start a timer associated with the SDT when the measurement reporting timer is stopped, i.e., when it is determined that the SDT procedure has been initiated.

At step 212, UE 110 may transmit data via the SDT procedure to wireless network node 120. At step 214, UE 110 may receive a SDT transmission from UE 110.

Steps 216 - 220 may be performed in an example embodiment, wherein UE 110 is moved to the connected mode after the SDT procedure. At step 216, UE 110 may receive a connection resume message, like RRCResume, or a connection setup message, RRCSetup, from wireless network node 120. UE 110 may thus determine that a connection with wireless network node 120 is started, as starting the connection with wireless network node 120 may comprise a connection resume or setup procedure not associated with the SDT procedure.

At step 218, UE 110 may transmit results of the performed measurements to a wireless network node when starting the connection with wireless network node 120. That is, if EMR results are available, UE 110 may indicate the results to the network. In some example embodiments, UE 110 may indicate to wireless network node 120 whether SDT procedure interrupted EMR. That is, UE 110 may determine that it is moved to the connected mode after the SDT procedure and then transmit an indication indicating whether the measurements were stopped during the SDT procedure. The wireless network node 120 may then use this information to determine whether it is useful to retrieve the measurements from UE. At step 220, wireless network node 120 may retrieve results of the performed measurements (as per legacy). Hence, wireless network node 120 may determine whether UE 110 stopped performing measurements upon determining that a SDT has been initiated while UE 110 was in the idle or inactive mode and receive results of performed measurements from UE 110 when starting the connection with UE 110.

Alternatively, steps 222 - 226 may be performed in an example embodiment, wherein UE 110 is moved to the idle or inactive mode after the SDT procedure. At step 222, wireless network node 120 may transmit a connection release message, like RRCRelease message or a connection release message, like RRCReject message, to UE 110. In some example embodiments, UE 110 may thus determine that it is moved to the idle mode or continues in the inactive mode after the SDT procedure. UE 110 may also receive from wireless network node 120, an indication indicating whether to continue performing the measurements in the idle or inactive mode. Alternatively, UE 110 behavior may be predefined, and it may determine to continue performing the measurements in the idle or inactive mode without indication from the wireless network node 120.

At step 224, if performing the measurements in the idle or inactive mode continues, UE 110 may (re)start the measurement timer. For example, the UE 110 may (re)start the measurement timer upon receiving the RRCReject message or RRCRelease message from wireless network node 120. Alternatively, the UE 110 may continue the measurement timer from the value it was left upon stopping the measurement timer, e.g., at initiation of small data transmission procedure. In such a case, UE 110 may, at step 226, also continue performing measurements and transmit, at step 228, results of the performed measurements to wireless network node 120 when starting a connection with wireless network node 120. Otherwise, UE 110 may release the stored measurement results.

The SDT procedure may involve UE 110 transmitting data to wireless network node 120. The data may be data radio bearer (DRB) data or signalling radio bearer (SRB) data. The wireless network node 120 may configure which DRBs and/or SRBs data is allowed to be transmitted over SDT procedure. In some examples, the UE 110 may receive data in a buffer of a DRB or a SRB which is not allowed to be transmitted over SDT procedure while the SDT procedure is ongoing. In such case, the UE 110 may initiate transmission of an indication to wireless network node 120 about the availability of such data ("non-SDT data"). In some examples, such indication of non-SDT data is always allowed to be transmitted over the SDT procedure. The indication may be transmitted by the UE 110 to wireless network node 120 by using RRC signaling message.

At least some example embodiments of the present disclosure therefore enable performing measurements in the idle or inactive mode together with the SDT procedure, i.e., EMR to function with SDT. Moreover, network control over whether UE 110 continues performing measurements in the idle or inactive mode, or not, may be enabled. It is also possible that UE 110 would stop performing the measurements during the SDT procedure but then continue performing the measurements in the idle or inactive mode after the SDT procedure, for example if the SDT procedure is brief, without requiring wireless network node 120 to always move UE 110 back to the connected mode to configure UE 110 to perform measurements in the idle or inactive mode again. Hence, the operation related to measurements during the SDT procedure may be enhanced in general.

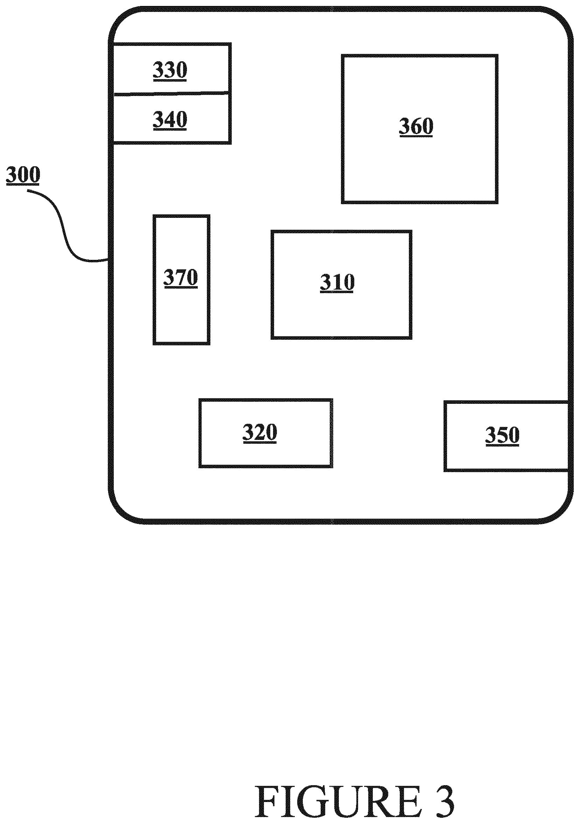

FIGURE 3 illustrates an example apparatus capable of supporting at least some example embodiments. Illustrated is device 300, which may comprise, for example, UE 110 or wireless network node 120, or a control device configured to control the functioning thereof, possibly when installed therein. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise randomaccess memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Global System for Mobile communication, GSM, Wideband Code Division Multiple Access, WCDMA, Long Term Evolution, LTE, and/or 5G/NR standards, for example.

Device 300 may comprise a Near-Field Communication, NFC, transceiver 350. NFC transceiver 350 may support at least one NFC technology, such as Bluetooth, Wibree or similar technologies.

Device 300 may comprise User Interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a Subscriber Identity Module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some example embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the example embodiment various ways of interconnecting at least two of the aforementioned devices may be selected without departing from the scope of the example embodiments.

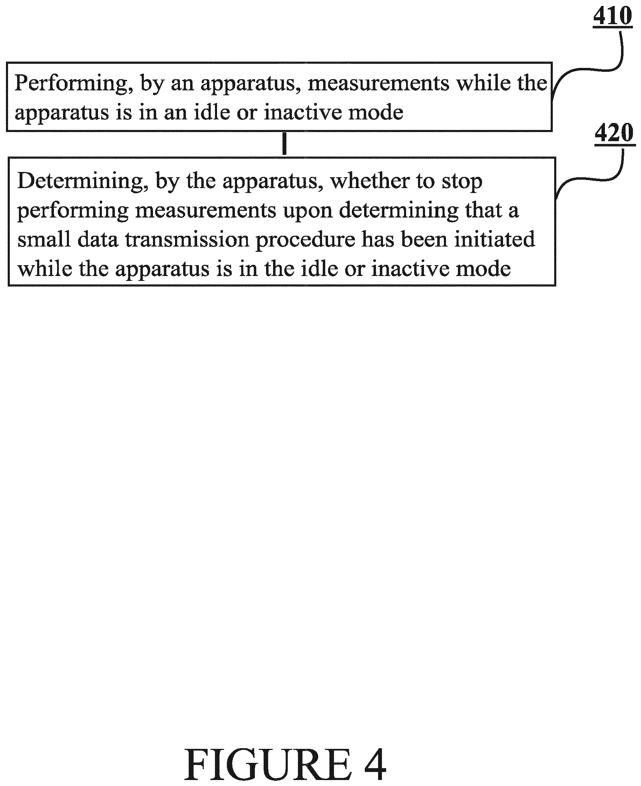

FIGURE 4 is a flow graph of a first method in accordance with at least some example embodiments. The phases of the illustrated first method may be performed by apparatus 300, like UE 110 or by a control device configured to control the functioning thereof, possibly when installed therein.

The method may comprise, at step 410, performing measurements while the apparatus is in an idle or inactive mode. The method may also comprise, at step 420, determining whether to stop performing measurements upon determining that a small data transmission procedure has been initiated while the apparatus is in the idle or inactive mode.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, such as, for example, UE 110 or wireless network node 120, may comprise means for carrying out the example embodiments described above and any combination thereof.

In an example embodiment, a computer program may be configured to cause a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, such as, for example, UE 110 or wireless network node 120, may comprise at least one processor, and at least one memory including computer program code, wherein the at least one memory and the computer program code are configured to, with the at least one processor, cause the apparatus at least to perform the example embodiments described above and any combination thereof.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the disclosure. One skilled in the relevant art will recognize, however, that the disclosure can be practiced without one or more of the specific details, or with other methods, components, materials, etc. In other instances, well-known structures, materials, or operations are not shown or described in detail to avoid obscuring aspects of the disclosure.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some example embodiments find industrial application in cellular communication networks, for example in 3GPP networks, wherein EMR is used together with the SDT procedure.

### ACRONYMS LIST

- 3GPP: 3rd Generation Partnership Project
- BS: Base Station
- CG: Configured Grant
- CSI: Channel State Information
- DRB: Data Radio Bearer
- DU: Distributed Unit
- EMR: Early Measurement Reporting
- GSM: Global System for Mobile communication
- IAB: Integrated Access and Backhaul
- IoT: Internet of Things
- LTE: Long-Term Evolution
- M2M: Machine-to-Machine
- MT: Mobile Termination
- NR: New Radio
- RACH: Random Access Channel
- RAN: Radio Access Network
- RAT: Radio Access Technology
- RLC: Radio Link Control
- RRC: Radio Resource Control
- RRM: Radio Resource Management
- SDT: Small Data Transmission
- SRB: Signaling Radio Bearer
- TRP: Transmission and Reception Point
- UE: User Equipment
- UI: User Interface
- WCDMA: Wideband Code Division Multiple Access
- WiMAX: Worldwide Interoperability for Microwave Access
- WLAN: Wireless Local Area Network

### REFERENCE SIGNS LIST

| | |
|---|---|
| 110 | UE |
| 115 | Air interface |
| 120 | Wireless network node |
| 125, 135 | Wired interfaces |
| 130 | Core Network |
| 202 - 228 | Steps of the signaling graph of FIGURE 2 |
| 300 - 370 | Structure of the apparatus of FIGURE 3 |
| 410 - 430 | Phases of the method in FIGURE 4 |

## Claims

1. An apparatus, comprising:
- means for performing measurements while the apparatus (110) is in an idle or inactive mode;
- means for determining whether to stop performing measurements upon determining that a small data transmission procedure has been initiated while the apparatus (110) is in the idle or inactive mode, wherein said measurements are performed while a timer is running, the apparatus (110) further comprising
- means for stopping the timer upon determining that the small data transmission procedure has been initiated while the apparatus (110) is in the idle or inactive mode, wherein the timer is a T331 timer.

2. The apparatus (110) according to claim 1, further comprising:
- means for transmitting results of the performed measurements to a wireless network node (120) when starting a connection with the wireless network node (120).

3. The apparatus (110) according to claim 2, wherein starting the connection with the wireless network node (120) comprises a connection resume or setup procedure not associated with the small data transmission procedure.

4. The apparatus according to claim 1, further comprising:
- means for continuing, starting, or re-starting the timer upon determining that the small data transmission procedure has been completed.

5. The apparatus according to claim 4, wherein the small data transmission procedure is determined to be completed successfully when a connection release or connection reject message is received from the wireless network node by the apparatus, or the small data transmission procedure is determined to be completed unsuccessfully when the connection release or connection reject message is not received within a time interval.

6. The apparatus (110) according to any preceding claim, further comprising:
- means for starting another timer when the timer is stopped, wherein said another timer is associated with the small data transmission procedure; and/or
- means for stopping the timer when said another timer is started.

7. The apparatus (110) according to any preceding claim, wherein said measurements are performed while the timer is running, and the apparatus (110) further comprises:
- means for continuing performing measurements during the small data transmission procedure upon stopping the timer.

8. The apparatus (110) according to any preceding claim, further comprising:
- means for determining whether to stop performing measurements during the small data transmission based on an indication received from the wireless network node.

9. The apparatus (110) according to any preceding claim, wherein the apparatus performs the measurements in the inactive mode, and further comprises:
- means for moving the apparatus to the idle mode upon determining that a configuration combining performing measurements and small data transmission is invalid.

10. The apparatus (110) according to any preceding claim, further comprising:
- means for continuing performing the measurements and not performing the small data transmission procedure; or
- means for stopping performing the measurements and performing the small data transmission procedure.

11. The apparatus (110) according to any preceding claim, wherein said measurements are performed while a timer is running, and the apparatus further comprises:
- means for storing results of the performed measurements upon determining to stop performing the measurements;
- means for continuing the timer and continuing performing the measurements upon determining that the small data transmission procedure has been completed or upon receiving a connection resume or connection setup message; and
- means for transmitting the stored measurement results to the wireless network node upon expiry of the timer.

12. The apparatus (110) according to any preceding claim, further comprising:
- means for determining that the apparatus is moved to a connected mode after the small data transmission procedure; and
- means for transmitting, to the wireless network node, an indication indicating whether the measurements were stopped during the small data transmission procedure.

13. The apparatus (110) according to any preceding claim, further comprising:
- means for determining that the apparatus is moved to the idle mode or continues in the inactive mode after the small data transmission procedure; and
- means for receiving, from the wireless network node, an indication indicating whether to continue performing the measurements in the idle or inactive mode.

14. An apparatus (120), comprising:
- means for determining whether a user equipment (110) stopped performing measurements upon determining that a small data transmission procedure has been initiated while the user equipment was in an idle or inactive mode,
wherein said measurements are performed while a timer is running,
wherein the timer is stopped upon determining that the small data transmission procedure has been initiated while the user equipment is in the idle or inactive mode,
wherein the timer is a T331 timer; and means for receiving results of performed measurements from the user equipment (110) when starting a connection with the user equipment (110).

## Patentansprüche

1. Einrichtung, die Folgendes umfasst:
- Mittel zum Durchführen von Messungen, während sich die Einrichtung (110) in einem Ruhe- oder einem Inaktivitätsmodus befindet;
- Mittel zum Bestimmen, ob nach Bestimmen, dass eine Kleindatenübertragungsprozedur initiiert wurde, während sich die Einrichtung (110) im Ruhe- oder Inaktivitätsmodus befand, das Durchführen von Messungen gestoppt werden soll, wobei die Messungen durchgeführt werden, während ein Timer läuft, wobei die Einrichtung (110) ferner Folgendes umfasst
- Mittel zum Stoppen des Timers nach Bestimmen, dass die Kleindatenübertragungsprozedur initiiert wurde, während sich die Einrichtung (110) im Ruhe- oder Inaktivitätsmodus befand, wobei der Timer ein T331-Timer ist.

2. Einrichtung (110) nach Anspruch 1, die ferner Folgendes umfasst:
- Mittel zum Übertragen von Ergebnissen der durchgeführten Messungen zu einem drahtlosen Netzwerkknoten (120), während eine Verbindung mit dem drahtlosen Netzwerkknoten (120) gestartet wird.

3. Einrichtung (110) nach Anspruch 2, wobei das Starten der Verbindung mit dem drahtlosen Netzwerkknoten (120) eine Verbindungswiederaufnahme- oder -einrichtungsprozedur umfasst, die mit der Kleindatenübertragungsprozedur nicht verknüpft ist.

4. Einrichtung nach Anspruch 1, die ferner Folgendes umfasst:
- Mittel zum Fortsetzen, Starten oder erneuten Starten des Timers nach Bestimmen, dass die Kleindatenübertragungsprozedur abgeschlossen ist.

5. Einrichtung nach Anspruch 4, wobei bestimmt wird, dass die Kleindatenübertragungsprozedur erfolgreich abgeschlossen ist, wenn eine Verbindungsfreigabe- oder eine Verbindungszurückweisungsnachricht durch die Einrichtung vom drahtlosen Netzwerkknoten empfangen wird, oder bestimmt wird, dass die Kleindatenübertragungsprozedur erfolgreich abgeschlossen ist, wenn die Verbindungsfreigabe- oder die Verbindungszurückweisungsnachricht nicht innerhalb eines Zeitintervalls empfangen wird.

6. Einrichtung (110) nach einem der vorhergehenden Ansprüche, das ferner Folgendes umfasst:
- Mittel zum Starten eines weiteren Timers, wenn der Timer gestoppt wird, wobei der weitere Timer mit der Kleindatenübertragungsprozedur verknüpft ist; und/oder
- Mittel zum Stoppen des Timers, wenn ein weiterer Timer gestartet wird.

7. Einrichtung (110) nach einem der vorhergehenden Ansprüche, wobei die Messungen durchgeführt werden, während der Timer läuft, und die Einrichtung (110) ferner Folgendes umfasst:
- Mittel zum Fortsetzen des Durchführens von Messungen während der Kleindatenübertragungsprozedur nach Stoppen des Timers.

8. Einrichtung (110) nach einem der vorhergehenden Ansprüche, die ferner Folgendes umfasst:
- Mittel zum Bestimmen auf Basis einer Anzeige, die vom drahtlosen Netzwerkknoten empfangen wird, ob das Durchführen von Messungen während der Kleindatenübertragung gestoppt werden soll.

9. Einrichtung (110) nach einem der vorhergehenden Ansprüche, wobei die Einrichtung die Messungen im Inaktivitätsmodus durchführt und ferner Folgendes umfasst:
- Mittel zum Verschieben der Einrichtung in den Ruhemodus nach Bestimmen, dass eine Auslegung, die das Durchführen von Messungen und eine Kleindatenübertragung kombiniert, ungültig ist.

10. Einrichtung (110) nach einem der vorhergehenden Ansprüche, die ferner Folgendes umfasst:
- Mittel zum Fortsetzen des Durchführens der Messungen und Unterlassen des Durchführens der Kleindatenübertragungsprozedur oder
- Mittel zum Stoppen des Durchführens der Messungen und des Durchführens der Kleindatenübertragungsprozedur.

11. Einrichtung (110) nach einem der vorhergehenden Ansprüche, wobei die Messungen durchgeführt werden, während ein Timer läuft, und die Einrichtung ferner Folgendes umfasst:
- Mittel zum Speichern von Ergebnissen der durchgeführten Messungen nach Bestimmen, das Durchführen der Messungen zu stoppen;
- Mittel zum Fortsetzen des Timers und Fortsetzen des Durchführens der Messungen nach Bestimmen, dass die Kleindatenübertragungsprozedur abgeschlossen ist, oder nach Empfangen einer Verbindungswiederaufnahme- oder einer Verbindungszurückweisungsnachricht und
- Mittel zum Übertragen der gespeicherten Messergebnisse zum drahtlosen Netzwerkknoten nach Ablauf des Timers.

12. Einrichtung (110) nach einem der vorhergehenden Ansprüche, die ferner Folgendes umfasst:
- Mittel zum Bestimmen, dass die Einrichtung nach der Kleindatenübertragungsprozedur in einen Verbindungsmodus verschoben wird; und
- Mittel zum Übertragen einer Anzeige, die anzeigt, ob die Messungen während der Kleindatenübertragungsprozedur gestoppt wurden, zum drahtlosen Netzwerkknoten.

13. Einrichtung (110) nach einem der vorhergehenden Ansprüche, die ferner Folgendes umfasst:
- Mittel zum Bestimmen, dass die Einrichtung nach der Kleindatenübertragungsprozedur in den Ruhemodus verschoben wird oder im Inaktivitätsmodus fortgesetzt wird; und
- Mittel zum Empfangen einer Anzeige, die anzeigt, ob das Durchführen der Messungen im Ruhe- oder Inaktivitätsmodus fortgesetzt werden soll, vom drahtlosen Netzwerkknoten.

14. Einrichtung (120), die Folgendes umfasst:
Mittel zum Bestimmen, ob eine Teilnehmereinrichtung (110) das Durchführen von Messungen nach Bestimmen, dass eine Kleindatenübertragungsprozedur initiiert wurde, während sich die Teilnehmereinrichtung in einem Ruhe- oder einem Inaktivitätsmodus befand, gestoppt hat,
wobei die Messungen durchgeführt werden, während ein Timer läuft,
wobei der Timer nach Bestimmen, dass die Kleindatenübertragungsprozedur initiiert wurde, während sich die Teilnehmereinrichtung im Ruhe- oder im Inaktivitätsmodus befand, gestoppt wird,
wobei der Timer ein T331-Timer ist und
Mittel zum Empfangen von Ergebnissen von durchgeführten Messungen von der Teilnehmereinrichtung (110), wenn eine Verbindung mit der Teilnehmereinrichtung (110) gestartet wird.

## Revendications

1. Appareil, comprenant :
- des moyens pour réaliser des mesures pendant que l'appareil (110) est dans un mode veille ou inactif ;
- des moyens pour déterminer s'il faut arrêter de réaliser des mesures lorsqu'il est déterminé qu'une procédure de transmission de petites données a été initiée tandis que l'appareil (110) est en mode veille ou inactif, dans lequel lesdites mesures sont réalisées tandis qu'un temporisateur tourne, l'appareil (110) comprenant en outre
- des moyens pour arrêter le temporisateur lorsqu'il est déterminé que la procédure de transmission de petites données a été initiée tandis que l'appareil (110) est en mode veille ou inactif, dans lequel le temporisateur est un temporisateur T331.

2. Appareil (110) selon la revendication 1, comprenant en outre :
- des moyens pour transmettre les résultats des mesures réalisées à un nœud de réseau sans fil (120) lors du démarrage d'une connexion avec le nœud de réseau sans fil (120).

3. Appareil (110) selon la revendication 2, dans lequel le démarrage de la connexion avec le nœud de réseau sans fil (120) comprend une procédure de reprise ou d'établissement de connexion non associée à la procédure de transmission de petites données.

4. Appareil selon la revendication 1, comprenant en outre :
- des moyens pour continuer, démarrer ou redémarrer le temporisateur lorsqu'il est déterminé que la procédure de transmission de petites données est terminée.

5. Appareil selon la revendication 4,
dans lequel la procédure de transmission de petites données est déterminée comme étant terminée avec succès lorsqu'un message de libération de connexion ou de rejet de connexion est reçu du nœud de réseau sans fil par l'appareil, ou la procédure de transmission de petites données est déterminée comme étant terminée sans succès lorsque le message de libération de connexion ou de rejet de connexion n'est pas reçu dans un intervalle de temps.

6. Appareil (110) selon l'une des revendications précédentes, comprenant en outre :
- des moyens pour démarrer un autre temporisateur lorsque le temporisateur est arrêté, dans lequel ledit autre temporisateur est associé à la procédure de transmission de petites données ; et/ou
- des moyens pour arrêter le temporisateur lorsque ledit autre temporisateur est démarré.

7. Appareil (110) selon l'une des revendications précédentes, dans lequel lesdites mesures sont réalisées tandis que le temporisateur tourne, et l'appareil (110) comprend en outre :
- des moyens pour continuer à réaliser des mesures pendant la procédure de transmission de petites données lors de l'arrêt du temporisateur.

8. Appareil (110) selon l'une des revendications précédentes, comprenant en outre :
- des moyens pour déterminer s'il faut arrêter de réaliser des mesures pendant la transmission de petites données sur la base d'une indication reçue du nœud de réseau sans fil.

9. Appareil (110) selon l'une des revendications précédentes, dans lequel l'appareil effectue les mesures en mode inactif, et comprend en outre :
- des moyens faire passer l'appareil en mode veille lorsqu'il est déterminé qu'une configuration combinant la réalisation de mesures et une transmission de petites données n'est pas valide.

10. Appareil (110) selon l'une des revendications précédentes, comprenant en outre :
- des moyens pour continuer à réaliser les mesures et ne pas réaliser la procédure de transmission de petites données ; ou
- des moyens pour arrêter de réaliser les mesures et réaliser la procédure de transmission de petites données.

11. Appareil (110) selon l'une des revendications précédentes, dans lequel lesdites mesures sont réalisées tandis qu'un temporisateur tourne, et l'appareil comprend en outre :
- des moyens pour stocker les résultats des mesures réalisées lorsqu'il est déterminé d'arrêter de réaliser les mesures ;
- des moyens pour continuer avec le temporisateur et continuer de réaliser les mesures lorsqu'il est déterminé que la procédure de transmission de petites données est terminée ou à la réception d'un message de reprise de connexion ou d'établissement de connexion ; et
- des moyens pour transmettre les résultats de mesure stockés au nœud de réseau sans fil à l'expiration du temporisateur.

12. Appareil (110) selon l'une des revendications précédentes, comprenant en outre :
- des moyens pour déterminer que l'appareil est passé en mode connecté après la procédure de transmission de petites données ; et
- des moyens pour transmettre au nœud de réseau sans fil une indication indiquant si les mesures se sont arrêtées pendant la procédure de transmission de petites données.

13. Appareil (110) selon l'une des revendications précédentes, comprenant en outre :
- des moyens pour déterminer que l'appareil est passé en mode veille ou continue en mode inactif après la procédure de transmission de petites données ; et
- des moyens pour recevoir du nœud de réseau sans fil une indication indiquant s'il faut continuer à réaliser les mesures en mode veille ou inactif.

14. Appareil (120), comprenant :
- des moyens pour déterminer si un équipement utilisateur (110) a arrêté de réaliser des mesures lorsqu'il est déterminé qu'une procédure de transmission de petites données a été initiée tandis que l'équipement utilisateur était en mode veille ou inactif,
dans lequel lesdites mesures sont réalisées tandis qu'un temporisateur tourne,
dans lequel le temporisateur est arrêté lorsqu'il est déterminé que la procédure de transmission de petites données a été initiée tandis que l'équipement utilisateur est en mode veille ou inactif,
dans lequel le temporisateur est un temporisateur T331 ; et
des moyens pour recevoir de l'équipement utilisateur (110) les résultats des mesures réalisées lors du démarrage d'une connexion avec l'équipement utilisateur (110).
